# FASCICULE DE BREVET EUROPEEN

(11) **EP 2 814 738 B1**
(45) Date de publication et mention de la délivrance du brevet: **20.04.2016**
(21) Numéro de dépôt: 13711073.0
(22) Date de dépôt: 12.02.2013
(51) Int. Cl.: B64D 41/00, B64D 33/02, B64D 13/06, B64D 13/00, B64D 27/08

(54) **DISPOSITIF D'ALIMENTATION EN AIR D'UN GROUPE AUXILIAIRE DE PUISSANCE D'UN AERONEF, AERONEF**
VORRICHTUNG ZUR LUFTVERSORGUNG EINES HILFSTRIEBWERKES EINES FLUGZEUGS UND FLUGZEUG
DEVICE FOR SUPPLYING AIR TO AN AUXILIARY POWER UNIT OF AN AIRCRAFT AND AIRCRAFT

(30) Priorité: 13.02.2012 FR 1251323
(43) Date de publication de la demande: 24.12.2014
(73) Titulaire: Societe de Motorisations Aeronautiques, 18000 Bourges (FR)
(72) Inventeur: JOUBERT, Hugues Denis, F-75005 Paris (FR); FERRARI, Sébastien, F-77310 Boissise Le Roi (FR)
(74) Mandataire: Cabinet Camus Lebkiri
(86) Numéro de dépôt international: PCT/FR2013/050283
(87) Numéro de publication internationale: WO 2013/121139

(56) Documents cités:
- EP-A1- 1 918 200
- GB-A- 2 127 492
- GB-A- 2 348 670
- US-A- 4 503 666
- US-A1- 2009 088 063

## Description

### DOMAINE

Le domaine de l'invention concerne les circuits d'alimentation en air d'un groupe auxiliaire de puissance d'un aéronef permettant de produire de l'électricité dans un aéronef et de produire de l'air conditionné en cabine.

### ETAT DE L'ART

Actuellement il existe des groupes auxiliaires de puissance, notés GAP par la suite, basés soit sur une technologie de turbine, soit sur une technologie diesel.

EP 1918200 A1 est consideré l'état de la technique le plus proche.

Les groupes auxiliaires de puissance comprenant des turbines ont l'avantage d'être légers et de petites dimensions. Cela constitue un réel avantage en aéronautique. En revanche, le rendement des GAP comprenant une ou des turbine(s) est faible, car ces derniers étant de petites tailles ne permettent pas de réaliser la combustion à haute pression (de l'ordre de 10 à 15 bars) et par conséquent ont un faible rendement thermodynamique. De plus compte tenu de leurs petites tailles, les pertes technologiques sont importantes, ce qui augmente également la consommation de carburant. A titre d'exemple, ces GAP ont besoin de 400 à 500 grammes de kérosène pour produire un kilowatt par heure.

En revanche des GAP basés sur une technologie diesel ont un rendement amélioré vis-à-vis d'un GAP à turbines du fait d'une combustion s'effectuant à très haute pression (entre 150 bars et 200 bars). Concernant l'amélioration de la consommation, on arrive à diviser par deux les besoins énergétiques d'un tel GAP. Cette dernière solution permet de diminuer la consommation du carburant et de rattraper l'économie de poids d'un GAP à turbine par la masse de carburant économisé.

Les GAP fonctionnent généralement au sol pour fournir de l'air conditionné en cabine et de l'électricité dans l'aéronef lorsque les moteurs principaux de l'avion sont à l'arrêt. L'air produit est ensuite évacué de l'aéronef par des sorties d'échappement.

De plus en plus, le GAP peut être sollicité en vol dans la mesure où le moteur principal peut : soit alléger son fonctionnement ; soit nécessiter une alimentation complémentaire en cas de panne d'un moteur principal se produisant dans l'aéronef. Ainsi, il devient intéressant de soulager le moteur principal en produisant l'électricité dans l'aéronef et l'air de pressurisation en partie par le GAP, et ce même en vol. Ce fonctionnement peut être particulièrement important, pour des avions disposant d'un nombre important d'équipements électriques (Avion plus électrique).

Ces besoins croissants de solliciter le GAP en vol ont notamment un inconvénient dans la mesure où les GAP utilisés ne sont pas dimensionnés pour fonctionner dans des conditions de vol, c'est-à-dire à basse température et à basse pression.

Typiquement, à 40000 pieds d'altitude, la température peut avoisiner des valeurs proches de -55°C et les valeurs de pression peuvent être aux alentours de 0,20 bars. Il n'est alors pas possible de démarrer un moteur de type diesel aux températures et aux pressions environnantes.

En outre, un autre problème est d'assurer une stabilité de fonctionnement d'un moteur GAP diesel dans de telles conditions.

Il existe des dispositifs de préchauffage de l'air d'admission utilisés par exemple sur des véhicules terrestres dans des pays où les températures descendent à des températures avoisinant les -50°C.

Mais ces dispositifs ne résolvent pas la problématique des basses pressions qui pénalisent la stabilité de fonctionnement du GAP. En outre, ils nécessitent souvent la mise en place d'un brûleur auxiliaire.

En conséquence, ces solutions ne conviennent pas à l'architecture d'un aéronef ayant une problématique d'une consommation de kérosène minimale.

### RESUME DE L'INVENTION

L'invention permet de résoudre les inconvénients précités.

L'invention a pour objet un dispositif d'alimentation en air d'un groupe auxiliaire de puissance pour aéronef, comprenant :
- ledit groupe auxiliaire de puissance;
- un turbocompresseur et ;
- une cabine,
ledit groupe auxiliaire de puissance comportant un moteur diesel couplé au turbocompresseur de telle sorte que :
- ledit turbocompresseur comportant au moins :
   ▪ une première entrée d'air dans un compresseur du turbocompresseur provenant de la cabine pour son admission dans une chambre de combustion du moteur diesel,
- ledit moteur comportant au moins :
   ▪ une première sortie acheminant l'air brûlé par la chambre de combustion vers le turbocompresseur.

En outre, le moteur diesel délivre une puissance permettant d'alimenter un alternateur électrique et un compresseur dit de pressurisation, destiné à pressuriser une seconde entrée d'air. La première entrée d'air est alimentée par une fraction d'air pressurisée de la cabine d'un l'aéronef.

Un seul compresseur est utilisé pour d'une part être couplé à la turbine du turbocompresseur et d'autre part acheminer dans la chambre de combustion du moteur diesel une fraction d'air compressé.

Le turbocompresseur comprend un compresseur alimentant la chambre de combustion du moteur diesel et une turbine alimentée par l'air de combustion. Cette turbine entraîne le compresseur. L'alternateur électrique et le compresseur de pressurisation sont destinés à contribuer à la pressurisation de l'air de la cabine de l'aéronef.

L'entrée d'air du turbocompresseur est alimentée par une arrivée d'air pressurisée de la cabine des passagers ou de l'équipage d'un l'aéronef. Dans une variante de réalisation, un fonctionnement au sol permet d'alimenter le turbocompresseur par une arrivée d'air provenant de l'extérieur. Avantageusement, l'invention permet de configurer cette arrivée d'air de manière à permettre le fonctionnement du turbocompresseur au sol ou en vol avec deux modes d'alimentation d'air.

Un avantage de cette caractéristique est que l'air arrivant dans le moteur diesel en vol est plus chaud et sa pression est plus élevée que l'air provenant de l'extérieur. Aucune source d'énergie supplémentaire n'est donc utilisée pour réchauffer de l'air en entrée du moteur diesel. Ce dernier, dans ces conditions, peut démarrer ou s'allumer sans l'aide d'un brûleur auxiliaire. En outre, la stabilité de fonctionnement d'un tel moteur est améliorée car l'air acheminé dans le moteur peut être maintenu à une température et à une pression constantes au sol et dans toutes les phases du vol.

Avantageusement, une vanne de régulation disposée en entrée du groupe auxiliaire de puissance permet de sélectionner une entrée d'air entrant dans la chambre de combustion du moteur entre la première entrée d'air provenant de la cabine de l'aéronef pour une configuration d'utilisation en vol et une seconde entrée d'air provenant de l'extérieur de l'aéronef pour une configuration d'utilisation au sol.

Un avantage est de permettre une utilisation du turbocompresseur dans toutes les phases de vol tout en restant compatible des modes de fonctionnement au sol dans lesquels l'air provient de l'extérieur.

Avantageusement, un filtre à air est disposé en entrée de la première entrée d'air.

Un avantage de cette caractéristique est que le filtre permet d'éliminer des particules parasites qui risquent de détériorer le turbocompresseur et le moteur diesel.

Avantageusement, le compresseur de pressurisation injecte une portion d'air compressé provenant de l'extérieur de l'aéronef dans un premier mélangeur mélangeant une fraction d'air provenant de l'extérieur et une fraction d'air provenant du compresseur de pressurisation, le premier mélangeur délivrant en sortie un volume d'air pressurisé à une température et une pression souhaitées. Cet air est acheminé dans la cabine.

Un avantage de cette caractéristique est que le groupe auxiliaire de puissance peut être un moteur complémentaire du moteur principal dans toutes les phases du vol et au sol. Une partie de la puissance délivrée par le moteur principal peut donc être produite par le groupe auxiliaire de puissance, notamment en ce qui concerne la production d'énergie électrique et de l'alimentation du compresseur permettant de générer un volume d'air pressurisé dans la cabine. Puisque le groupe auxiliaire de puissance pour une puissance donnée délivrée consomme moins de kérosène que le moteur principal, le dispositif de l'invention permet d'économiser du carburant et donc de l'argent vis-à-vis des solutions extérieures.

Avantageusement, un second mélangeur en sortie du premier mélangeur permet de mélanger l'air en sortie du premier mélangeur et une fraction d'air provenant de la cabine. Le second mélangeur délivre un volume d'air pressurisé dans la cabine.

Cette caractéristique comporte l'avantage d'être facilement adaptable à l'invention. Notamment, la sortie d'air de la cabine destinée à introduire de l'air dans le second mélangeur peut être partagée avec la sortie acheminant l'air de la cabine dans le compresseur du groupe auxiliaire. Un diviseur ou une vanne peut être utilisée en sortie de la cabine pour acheminer une fraction de l'air dans le second mélangeur et une fraction dans le compresseur C du groupe auxiliaire de puissance.

Avantageusement, l'invention concerne un aéronef comportant un circuit d'aération comprenant un dispositif d'alimentation en air de l'invention. L'avantage d'un tel aéronef est de consommer moins de carburant qu'un autre aéronef.

### BREVES DESCRIPTION DES FIGURES

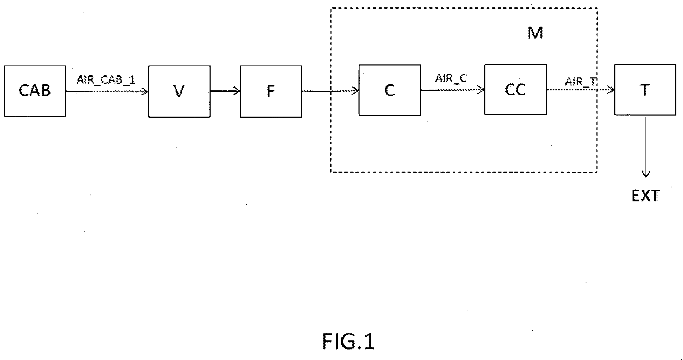

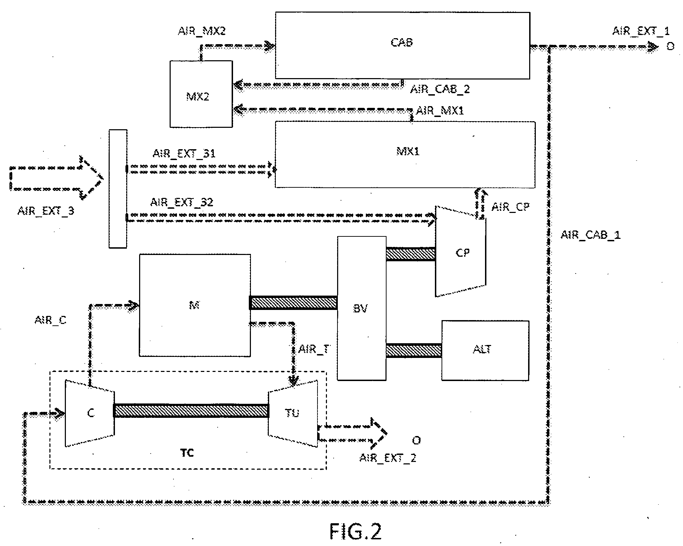

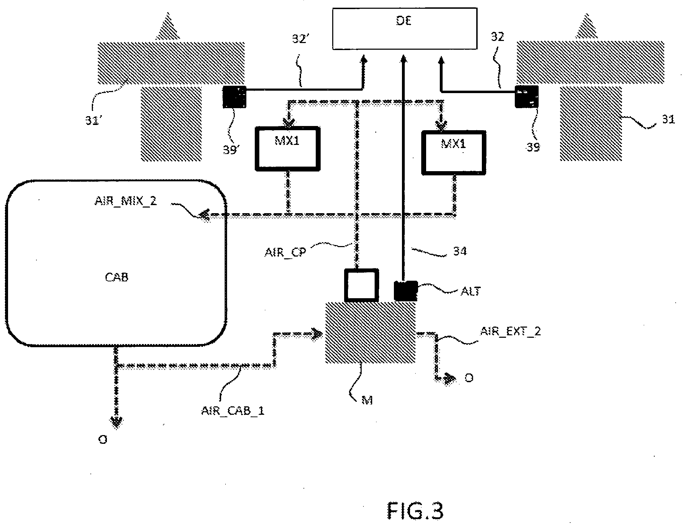

D'autres caractéristiques et avantages de l'invention ressortiront à la lecture de la description détaillée qui suit, en référence aux figures annexées, qui illustrent :
▪ figure 1 : un schéma des principaux éléments qui permettent d'acheminer l'air de la cabine au sein du groupe auxiliaire de puissance ;
▪ figure 2 : un schéma représentant une architecture du circuit de distribution d'air d'un aéronef ;
▪ figure 3 : un schéma représentant l'architecture électrique et de distribution d'air du groupe auxiliaire de puissance avec le moteur principal.

### DESCRIPTION

Le dispositif d'alimentation en air de l'invention permet de récupérer une fraction de l'air pressurisé de la cabine de manière à alimenter le moteur diesel d'un groupe auxiliaire de puissance. La fraction est adaptée au volume admissible à l'entrée du compresseur C du turbocompresseur.

Dans différentes variantes de réalisation, un régulateur permet d'adapter la fraction d'air provenant de la cabine pour l'acheminer à l'entrée du compresseur C. La fraction d'air peut donc être adaptée au gabarit d'entrée d'air du compresseur C.

L'air étant plus chaud que celui de l'extérieur et la pression plus élevée que celle de l'extérieure, cet apport d'air permet de garantir un fonctionnement du moteur diesel du groupe auxiliaire et son allumage au sol et dans toutes les phases du vol. L'intérêt d'une telle solution est de permettre le fonctionnement du moteur diesel notamment en vol, aux fins d'alimenter le circuit d'air pressurisé en cabine et l'alimentation de l'énergie électrique à bord. Le principal avantage réside dans la basse consommation du moteur diesel par rapport au moteur principal. Cela permet d'attribuer certaines fonctions en vol au moteur diesel et d'alléger le moteur principal de certaines tâches.

Ainsi un avionneur réalise des économies de carburant et bénéficie d'un second moteur en vol qui permet d'accroitre une sureté de fonctionnement lorsque des fonctions doivent être redondées ou doublement alimentées.

La figure 1 représente un schéma de principe des principaux éléments permettant d'acheminer l'air du dispositif d'alimentation depuis la cabine jusqu'à son échappement en sortie du moteur diesel.

Une cabine, notée CAB, de l'aéronef comporte un air pressurisé permettant aux passagers et à l'équipage d'obtenir des conditions d'oxygénation adéquates au sol et pendant toute la durée du vol.

La cabine comporte au moins une sortie notée AIR_CAB_1 destinée à réinjecter une fraction d'air de la cabine CAB dans le compresseur, noté C, du turboréacteur couplé au groupe auxiliaire de puissance. Le groupe auxiliaire de puissance comprend un moteur diesel, noté M, qui comporte une chambre de combustion, notée CC, pour brûler l'air entrant noté AIR_C provenant du compresseur C et acheminé dans le moteur diesel.

Dans une variante de réalisation, une vanne V peut-être positionnée en entrée du groupe auxiliaire de puissance de manière à pourvoir réguler l'air entrant dans le moteur M. La vanne V permet également d'acheminer en entrée une seconde entrée d'air non représentée sur la figure 1 qui provient de l'extérieur. La vanne peut éventuellement être pilotée de manière à obtenir des conditions souhaitées d'injection d'air dans le moteur en pression et en température. La vanne peut être configurée de manière à répondre à une exigence d'état de l'aéronef parmi les états suivants : au sol, en vol.

La source d'air alimentant le moteur peut donc dépendre de la configuration de l'aéronef s'il est au sol ou s'il est en vol.

Un filtre à air F peut être avantageusement positionné en aval de la vanne V de manière à filtrer l'air entrant notamment pour éliminer certaines particules.

En sortie de la chambre de combustion CC, l'air brûlé AIR_T est acheminé vers la turbine T du turbocompresseur et est évacué à l'extérieur EXT de l'aéronef. La turbine T permet d'entrainer le compresseur C du turbocompresseur.

La figure 2 représente un exemple détaillé d'un mode de réalisation du dispositif d'alimentation en air de l'invention.

Les flèches en pointillées représentent des flux d'air. Une fraction AIR_CAB_1 de l'air de la cabine CAB est prélevée pour être acheminée vers le compresseur C couplé au GAP comme déjà précisé à la figure 1. Le moteur diesel M prélève de l'air compressé AIR_C en provenance du compresseur C de la turbomachine TC. L'air brûlé AIR_T est réinjecté dans la turbine TU qui évacue l'air AIR_EXT_2 vers l'extérieur. L'extérieur est noté ○ dans la figure 2.

Le moteur diesel M permet d'entrainer une boite d'engrenage BV, cette dernière délivrant une première puissance à un alternateur ALT et une seconde puissance à un compresseur de pressurisation CP. Les délivrances de puissances sont transmises mécaniquement.

L'alternateur ALT permet de créer et d'alimenter une énergie électrique dans l'aéronef.

Le compresseur de pressurisation CP est entrainé par la boite d'engrenages BV et compresse un volume d'air AIR_EXT_32 provenant d'une fraction d'une arrivée d'air de l'extérieur notée AIR_EXT_3 et entrant dans le compresseur CP. L'air ainsi compressé AIR_CP est injecté dans un premier mélangeur, noté MX1. L'air compressé AIR_CP arrive donc dans le mélangeur MX1 à une pression et une température souhaitées, notamment plus élevées que la pression et la température que le volume d'air AIR_EXT_32.

Une seconde fraction de l'air AIR_EXT_31 de l'air extérieur AIR_EXT_3 entrant dans l'aéronef est acheminée directement dans le premier mélangeur MX1 sans être introduit dans le compresseur de pressurisation CP.

Le premier mélangeur MX1 permet de mélanger les deux volumes d'air entrants : d'une part un premier volume AIR_CP provenant du compresseur de pressurisation CP et d'autre part un second volume AIR_EXT_31 provenant de l'extérieur de l'aéronef. Le volume d'air AIR_EXT_31 est à une pression et une température plus basse que le volume d'air AIR_CP dans le premier mélangeur MX1. L'air mélangé dans le premier mélangeur AIR_MX1 est acheminé vers un second mélangeur MX2. La fonction du mélangeur MX1 est d'homogénéiser la pression des deux volumes d'air entrant AIR_CP et AIR_EXT_31.

Le second mélangeur MX2 situé en aval du premier mélangeur MX1 permet de délivrer un volume d'air mélangé AIR_MX2 dans la cabine CAB d'un aéronef. Une fraction de l'air de la cabine AIR_CAB_2 est prélevée dans la cabine pour être mélangée avec le volume d'air AIR_MIX_1 entrant dans le second mélangeur MX2 et provenant du premier mélangeur MX1. La fonction du second mélangeur est d'homogénéiser la température de l'air mélangé avant de l'introduire dans la cabine CAB.

L'air de la cabine CAB est donc:
- prélevé, pour une première fraction, de manière à être acheminé au second mélangeur MX2 via la sortie AIR_CAB_2,
- évacué, pour une seconde fraction, vers l'extérieur ○ via une sortie AIR_EXT_1 et ;
- prélevé, pour une troisième fraction, via la sortie AIR_CAB_1 pour être injecté dans le compresseur C du turbocompresseur TC du groupe auxiliaire de puissance GAP.

La figure 3 permet de représenter le dispositif d'alimentation dans l'aéronef avec les moteurs principaux 31, 31' qui permettent de délivrer une partie de leur puissance à des alternateurs 39, 39'. Les alternateurs 39, 39' alimentent en électricité un équipement de distribution électrique DE au moyen des entrées électriques 32, 32'. On comprend dans la figure 3 que le moteur diesel M permet de générer une puissance électrique au moyen d'un alternateur dédié ALT qui peut potentiellement alimenter le réseau de distribution électrique de l'aéronef en vol par l'intermédiaire d'une entrée 34.

Un intérêt de cette solution est que la production électricité par l'alternateur ALT est plus économique que celle produite avec les alternateurs 39, 39', étant donné que le moteur M est moins consommateur que les moteurs principaux de l'aéronef.

Le second mélangeur n'est pas représenté sur la figure 3. Il peut être enlevé dans une variante de réalisation.

L'invention permet donc de disposer pour un groupe auxiliaire de puissance dans un aéronef d'un moteur diesel qui est plus économique et qui consomme moins de kérosène qu'un moteur à technologie turbine par exemple. Un avantage est qu'un tel moteur peut alors être utilisé pendant les phases de vol car l'air nécessaire en entrée du moteur peut être maintenu dans des conditions optimales en pression et en température pour son allumage et son fonctionnement et garanti une stabilité tout au long de son fonctionnement.

## Revendications

1. Dispositif d'alimentation en air d'un groupe auxiliaire de puissance (GAP) pour aéronef, comprenant :
• ledit groupe auxiliaire de puissance (GAP) ;
• un turbocompresseur (TC) et ;
• une cabine (CAB),
ledit groupe auxiliaire de puissance (GAP) comportant un moteur diesel (M) couplé au turbocompresseur (TC) de telle sorte que :
• ledit turbocompresseur (TC) comportant au moins :
▪ une première entrée d'air (AIR_CAB_1) dans un compresseur (C) du turbocompresseur (TC) provenant de la cabine (CAB) pour son admission dans une chambre de combustion (CC) du moteur diesel (M),
• ledit moteur (M) comportant au moins :
▪ une première sortie (AIR_T) acheminant l'air brûlé par la chambre de combustion (CC) vers le turbocompresseur (TC),
le moteur diesel (M) délivrant une puissance permettant d'alimenter un alternateur électrique (ALT) et un compresseur (CP) dit de pressurisation, destiné à pressuriser une seconde entrée d'air (AIR_EXT_32), et la première entrée d'air (AIR_CAB_1) du turbocompresseur (TC) étant alimentée par une fraction d'air pressurisée de la cabine (CAB) d'un l'aéronef.

2. Dispositif d'alimentation en air selon la revendication 1, caractérisé en en ce qu'une vanne de régulation (V) disposée en entrée du groupe auxiliaire de puissance permet de sélectionner une entrée d'air entrant dans la chambre de combustion (CC) du moteur entre la première entrée d'air (AIR_CAB_1) provenant de la cabine de l'aéronef pour une configuration d'utilisation en vol et une seconde entrée d'air provenant de l'extérieur (○) de l'aéronef pour une configuration d'utilisation au sol.

3. Dispositif d'alimentation en air selon l'une quelconque des revendications 1 à 2, caractérisé en en ce qu'un filtre à air (F) est disposé en entrée de la première entrée d'air (AIR_CAB_1).

4. Dispositif d'alimentation en air selon l'une quelconque des revendications 1 à 3, caractérisé en en ce que le compresseur de pressurisation (CP) injecte une portion d'air compressé (AIR_EXT_32) provenant de l'extérieur (○) de l'aéronef dans un premier mélangeur (MX1) mélangeant une fraction d'air provenant de l'extérieur (AIR_EXT_31) et une fraction d'air (AIR_EXT_CP) provenant du compresseur de pressurisation (CP), le premier mélangeur (MX1) délivrant en sortie de l'air (AIR_MX1) en cabine (CAB).

5. Dispositif d'alimentation en air selon l'une quelconque des revendications 1 à 4, caractérisé en en ce qu'un second mélangeur (MX2) en sortie du premier mélangeur (MX1) permet de mélanger l'air en sortie (AIR_MX1) du premier mélangeur (MX1) et une fraction d'air (AIR_CAB-2) provenant de la cabine (CAB), le second mélangeur (MX2) délivrant un volume d'air (AIR_MIX_2) pressurisé dans la cabine (CAB).

6. Aéronef comportant un circuit d'aération de l'air comprenant un dispositif d'alimentation selon l'une quelconque des revendications 1 à 5.

## Patentansprüche

1. Luftversorgungsvorrichtung eines Hilfsaggregats (GAP) für ein Luftfahrzeug, umfassend:
• das genannte Hilfsaggregat (GAP);
• einen Turbokompressor (TC) und;
• eine Kabine (CAB);
wobei das genannte Hilfsaggregat (GAP) einen an den Turbokompressor (TC) gekoppelten Dieselmotor (M) derart umfasst, dass:
• der genannte Turbokompressor (TC) wenigstens umfasst:
▪ einen ersten, aus der Kabine (CAB) stammenden Luftzugang (AIR_CAB_1) in einem Kompressor (C) des Turbokompressors (TC) für seinen Zugang in eine Verbrennungskammer (CC) des Dieselmotors (M) ;
• wobei der genannte Motor (M) wenigstens umfasst:
▪ einen ersten Ausgang (AIR_T), der die von der Verbrennungskammer (CC) verbrannte Luft zum Turbokompressor (TC) verbringt,
wobei der Dieselmotor (M) eine Leistung ausgibt, die die Versorgung eines elektrischen Wechselstromgenerators (ALT) und eines Kompressors (CP), bezeichnet als Druckbeaufschlagungskompressor erlaubt, der dazu bestimmt ist, einen zweiten Luftzugang (AIR_EXT_32) mit Druck zu beaufschlagen, und wobei der erste Luftzugang (AIR_CAB_1) des Turbokompressors (TC) durch einen mit Druck beaufschlagten Luftanteil der Kabine (CAB) eines Luftfahrzeugs versorgt wird.

2. Luftversorgungsvorrichtung gemäß Anspruch 1, **dadurch gekennzeichnet, dass** ein am Eingang des Hilfsaggregats angeordnetes Stellventil (V) die Auswahl eines Lufteingangs erlaubt, der in die Verbrennungskammer (CC) des Motors zwischen dem ersten Lufteintritt (AIR_CAB_1), der aus der Kabine des Luftfahrzeugs stammt, für eine Nutzungskonfiguration im Flug, und einem zweiten Lufteintritt, der von dem Außenbereich (0) des Luftfahrzeugs stammt, für eine Nutzungskonfiguration am Boden, eintritt.

3. Luftversorgungsvorrichtung gemäß Anspruch 1 bis 2, **dadurch gekennzeichnet, dass** ein Luftfilter (F) am Eingang des ersten Luftfilters (AIR_CAB_1) angeordnet ist.

4. Luftversorgungseinrichtung gemäß Anspruch 1 bis 3, **dadurch gekennzeichnet, dass** der Druckbeaufschla-gungskompressor (CP) einen Teil Pressluft (AIR_EXT_32), der aus dem Außenbereich (0) des Luftfahrzeugs stammt, in einen ersten Mischer (MX1) einschießt, der einen Luftteil, der aus dem Außenbereich (AIR_EXT_31) stammt, und einen Luftteil (AIR_EXT_CP), der aus dem Druckbeaufschlagungskompressor (CP) stammt, vermischt, wobei der erste Mischer (MX1) am Ausgang Luft (AIR_MX1) in der Kabine (CAB) ausgibt.

5. Luftversorgungsvorrichtung gemäß Anspruch 1 bis 4, **dadurch gekennzeichnet, dass** ein zweiter Mischer (MX2) am Ausgang des ersten Mischers (MX1) die Mischung der Luft am Ausgang (AIR_MX1) des ersten Mischers (MX1) und einen Luftteil (AIR_CAB_2), der aus der Kabine (CAB) stammt, zulässt, wobei der zweite Mischer (MX2) ein Luftvolumen (AIR_MIX_2) ausgibt, das in der Kabine (CAB) mit Druck beaufschlagt wird.

6. Luftfahrzeug, umfassend einen Belüftungskreis-lauf der Luft, umfassend eine Versorgungsvorrichtung gemäß Anspruch 1 bis 5.

## Claims

1. Device for supplying air to an auxiliary power unit (GAP) of an aircraft, including:
• said auxiliary power unit (GAP);
• a turbocharger (TC) and;
• a cabin (CAB),
said auxiliary power unit (GAP) comprising a diesel engine (M) coupled to the turbocharger (TC) such that:
• said turbocharger (TC) comprising at least:
▪ one first inlet of air (AIR_CAB_1) in a compressor (C) of the turbocharger (TC) coming from the cabin (CAB) for admitting air to a combustion chamber (CC) of the diesel engine (M),
• said engine (M) comprising at least:
▪ one first outlet (AIR_T) carrying the air burnt by the combustion chamber (CC) to the turbocharger (TC),
the diesel engine (M) delivering a power that is able to power an electric alternator (ALT) and a compressor (CP) known as the pressurizing compressor, intended to pressurize a second air inlet (AIR_EXT_32) and the first air inlet (AIR_CAB_1) of the turbocharger (TC) being fed with a fraction of pressurized air from the cabin (CAB) of the aircraft.

2. Device for supplying air according to claim 1, **characterised in that** a control valve (V) arranged at the inlet of the auxiliary power unit makes it possible to select an inlet of air entering into the combustion chamber (CC) of the engine between the first inlet of air (AIR_CAB_1) coming from the cabin of the aircraft for an in-flight use configuration and a second inlet of air coming from the outside (0) of the aircraft for a ground use configuration.

3. Device for supplying air according to any of claims 1 to 2, **characterised in that** an air filter (F) is arranged at the inlet of the first air inlet (AIR_CAB_1).

4. Device for supplying air according to any of claims 1 to 3, **characterised in that** the pressurizing compressor (CP) injects a portion of compressed air (AIR_EXT_32) coming from the outside (0) of the aircraft into a first mixer (MX1) mixing a fraction of air coming from the outside (AIR_EXT_31) and a fraction of air (AIR_EXT_CP) coming from the pressurizing compressor (CP), the first mixer (MX1) delivering at the outlet air (AIR_MX1) into the cabin (CAB).

5. Device for supplying air according to any of claims 1 to 4, **characterised in that** a second mixer (MX2) at the outlet of the first mixer (MX1) makes it possible to mix the air at the outlet (AIR_MX1) of the first mixer (MX1) and a fraction of air (AIR_CAB_2) coming from the cabin (CAB), the second mixer (MX2) delivering a volume of pressurized air (AIR_MIX_2) into the cabin (CAB).

6. Aircraft comprising an air ventilation circuit including a device for supplying air according to any of claims 1 to 5.
